# EUROPEAN PATENT APPLICATION

(11) **EP 4 621 856 A1**
(43) Date of publication of application: **24.09.2025**
(21) Application number: 23943499.6
(22) Date of filing: 28.12.2023
(51) Int. Cl.: H01M 4/00, H01M 4/04, H01M 4/13

(54) **POSITIVE ELECTRODE SHEET AND TREATMENT METHOD THEREFOR, AND BATTERY AND ELECTRIC DEVICE**

(30) Priority: 26.06.2023 CN 202310765774
(71) Applicant: Contemporary Amperex Technology Co., Limited, Ningde, Fujian 352100 (CN)
(72) Inventor: ZHANG, Zhenxu, Ningde, Fujian 352100 (CN); LIU, Huihui, Ningde, Fujian 352100 (CN); XING, Qi, Ningde, Fujian 352100 (CN); ZHANG, Xinhui, Ningde, Fujian 352100 (CN)
(74) Representative: Thoma, Michael
(86) International application number: PCT/CN2023/142931
(87) International publication number: WO 2025/001028

(57) **Abstract**

A positive electrode plate (221) and a treatment method thereof, a battery (100), and an electric device are provided. The treatment method of the positive electrode plate (221) includes: performing combustion treatment on a designated portion of the positive electrode plate (221), where the designated portion includes at least part of a surface of a positive electrode active material layer of the positive electrode plate (221). In the treatment method of the positive electrode plate (221), performing combustion treatment on the surface of the positive electrode plate (221) enables flame to ablate and reduce a floating binder, helping to alleviate blockage of pores by the floating binder, thereby effectively improving electrolyte infiltration of the positive electrode plate (221).

## Description

### CROSS-REFERENCE TO RELATED APPLICATIONS

This application claims priority to Chinese Patent Application No. 202310765774.2, filed on June 26, 2023 and entitled "POSITIVE ELECTRODE PLATE AND TREATMENT METHOD THEREOF, BATTERY, AND ELECTRIC DEVICE", which is incorporated herein by reference in its entirety.

### TECHNICAL FIELD

This application relates to the field of battery technology, and specifically, to a positive electrode plate and a treatment method thereof, a battery, and an electric device.

### BACKGROUND

Electrolyte infiltration of a positive electrode plate is a factor affecting battery performance. Improving the electrolyte infiltration of the positive electrode plate helps to improve rate performance, discharge capacity, and the like of the battery. However, in current positive electrode plates, infiltration often needs to be improved to satisfy design requirements such as high energy density and high cycling stability.

### SUMMARY

In view of the above issues, this application provides a positive electrode plate and a treatment method thereof, a battery, and an electric device, helping to alleviate the burr issue at edges of positive electrode plates.

Embodiments of this application are implemented as follows.

According to a first aspect, an embodiment of this application provides a treatment method of a positive electrode plate, including: performing combustion treatment on a designated portion of the positive electrode plate, where the designated portion includes at least part of a surface of a positive electrode active material layer of the positive electrode plate.

According to the treatment method of the positive electrode plate provided by the embodiment of this application, combustion treatment is performed on the surface of the positive electrode plate, and flame ablates and reduces the floating binder, helping to alleviate blockage of pores by the floating binder, thereby effectively improving the electrolyte infiltration of the positive electrode plate.

In some embodiments, upon completion of the combustion treatment, a combustion region on the surface of the positive electrode active material layer reaches a designated temperature, where the designated temperature is 200°C to 500°C.

In these embodiments, the combustion region on the surface of the positive electrode active material layer is controlled to reach the designated temperature upon completion of the combustion treatment, so that the surface of the positive electrode active material layer can be treated at an appropriate temperature. This helps to effectively ablate and reduce the floating binder, thereby significantly improving the electrolyte infiltration of the positive electrode plate.

It should be noted that, in other embodiments of this application, the designated temperature may, for example, alternatively be 130°C to 500°C, 140°C to 500°C, 150°C to 500°C, or 160°C to 500°C.

In some embodiments, the designated temperature is 300°C to 500°C. Optionally, the designated temperature is 350°C to 470°C.

In these embodiments, the combustion region is further controlled to reach the designated temperature, so that the surface of the positive electrode active material layer can be treated at a more appropriate temperature. This helps better ablate and reduce the floating binder, thereby further improving the electrolyte infiltration of the positive electrode plate.

In some embodiments, a binder in the positive electrode active material layer includes polyvinylidene fluoride.

In these embodiments, the combustion treatment can effectively remove the floating binder formed by polyvinylidene fluoride, thereby significantly improving the electrolyte infiltration of the positive electrode plate.

In some embodiments, a positive electrode active material in the positive electrode active material layer includes a lithium-containing phosphate.

In these embodiments, a decomposition temperature difference between the lithium-containing phosphate and the binder is significant, facilitating control of the designated temperature to be above a decomposition temperature of the binder but below a decomposition temperature of the lithium-containing phosphate. This enables effective removal of the floating binder to improve infiltration while good electrochemical performance of the positive electrode active material layer is maintained.

In some embodiments, the lithium-containing phosphate includes lithium iron phosphate.

In these embodiments, a decomposition temperature difference between lithium iron phosphate and the binder is significant, enabling effective removal of the floating binder to improve infiltration while good electrochemical performance of the positive electrode active material layer is maintained. In addition, lithium iron phosphate is a commonly used positive electrode active material, but a positive electrode plate using lithium iron phosphate often faces poor infiltration issues.

In some embodiments, the combustion treatment includes combusting a fuel gas and treating the designated portion with flame.

In these embodiments, performing the combustion treatment by combusting a fuel gas allows airflow generated by the fuel gas to blow away an ablation product of the floating binder. This facilitates more thorough ablation of the floating binder by the flame and helps maintain high cleanliness on the surface of the positive electrode plate.

In some embodiments, during the combustion treatment, a flow rate of the fuel gas is 3 L/min to 12 L/min. Optionally, the flow rate of the fuel gas is 5 L/min to 8 L/min.

In these embodiments, maintaining an appropriate fuel gas flow rate during the combustion treatment enables flame to provide appropriate heat to the designated portion, effectively removing the floating binder at an appropriate temperature to improve infiltration.

In some embodiments, during the combustion treatment, a flow rate of air is 70 L/min to 260 L/min. Optionally, the flow rate of air is 120 L/min to 180 L/min.

In these embodiments, maintaining an appropriate air flow rate during the combustion treatment facilitates achieving an appropriate air-fuel ratio, enabling flame to provide appropriate heat to the designated portion, effectively removing the floating binder at an appropriate temperature to improve infiltration.

In some embodiments, during the combustion treatment, an air-fuel ratio is (2-5): 1. Optionally, the air-fuel ratio is (3-4): 1.

In these embodiments, maintaining an appropriate air-fuel ratio during the combustion treatment enables flame to provide appropriate heat to the designated portion, effectively removing the floating binder at an appropriate temperature to improve infiltration.

In some embodiments, during the combustion treatment, the fuel gas is sprayed toward the positive electrode plate for combustion at a designated distance from the positive electrode plate, where the designated distance is 5 cm to 10 cm. Optionally, the designated distance is 5 cm to 7.5 cm.

In these embodiments, spraying the fuel gas toward the positive electrode plate at an appropriate designated distance for combustion facilitates controlling the temperature at which flame acts on the positive electrode plate, effectively removing the floating binder to improve infiltration.

In some embodiments, during the combustion treatment, the fuel gas is sprayed toward the positive electrode plate in a designated direction for combustion, and an angle between the designated direction and the thickness direction of the positive electrode plate is 0° to 30°. Optionally, the angle between the designated direction and the thickness direction of the positive electrode plate is 0° to 10°.

In these embodiments, spraying the fuel gas toward the positive electrode plate at an appropriate designated angle for combustion enables flame to effectively burn the positive electrode plate, more effectively removing the floating binder to improve infiltration.

In some embodiments, during the combustion treatment, the positive electrode plate passes through flame at a designated speed, where the designated speed is 40 m/min to 100 m/min. Optionally, the designated speed is 50 m/min to 80 m/min.

In these embodiments, the positive electrode plate passes through flame at an appropriate designated speed. This facilitates controlling the surface of the positive electrode plate to reach an appropriate temperature, effectively removing the floating binder to improve infiltration.

According to a second aspect, an embodiment of this application provides a positive electrode plate obtained through treatment according to the treatment method of the positive electrode plate as described in the above embodiments.

In some embodiments, a rate of electrolyte infiltration into the positive electrode plate is greater than 0.27 µg/s. Optionally, a rate of electrolyte infiltration into the positive electrode plate is greater than or equal to 0.33 µg/s.

In these embodiments, the positive electrode plate exhibits a high electrolyte infiltration rate, indicating good electrolyte infiltration of the positive electrode plate.

In some embodiments, a porosity of the positive electrode plate is greater than 29.2%. Optionally, the porosity of the positive electrode plate is greater than or equal to 32.6%.

In these embodiments, the positive electrode plate has a high porosity, helping to improve the electrolyte infiltration of the positive electrode plate.

According to a third aspect, an embodiment of this application provides a battery, including the positive electrode plate as described in the above embodiments.

According to a fourth aspect, an embodiment of this application provides an electric device, including the battery as described in the above embodiments.

The above description is merely an overview of the technical solutions of the embodiments of this application. To enable a clearer understanding of the technical means of this application and implementation based on the content of the specification, and to make the above and other objectives, features, and advantages of this application more apparent and understandable, specific embodiments of this application are provided below.

### BRIEF DESCRIPTION OF DRAWINGS

To more clearly illustrate the technical solutions of the embodiments of this application, the drawings for the embodiments are briefly described below. It should be understood that the following drawings only show some embodiments of this application and therefore should not be regarded as limitations on the scope. For persons of ordinary skill in the art, other related drawings can be obtained based on these drawings without creative effort.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of an electrode assembly according to some embodiments of this application;
FIG. 5 is a process flow diagram of a treatment method of a positive electrode plate according to some embodiments of this application;
FIG. 6 is a schematic diagram of a treatment method of a positive electrode plate from a side view according to some embodiments of this application; and
FIG. 7 is a schematic diagram of a treatment method of a positive electrode plate from a top view according to some embodiments of this application.

Reference signs:
1000. vehicle;
100. battery; 200. controller; 300. motor;
10. box; 11. first portion; 12. second portion; 13. accommodating space;
20. battery cell; 21. housing; 22. electrode assembly; 23. electrode terminal; 24. pressure relief structure;
211. housing body; 212. cover; 213. sealed space;
221. positive electrode plate; 222. negative electrode plate; 223. separator;
2221. first surface of positive electrode active material layer; 2222, second surface of positive electrode active material layer;

A. thickness direction of positive electrode plate; B. designated direction; C. passing direction of positive electrode plate; D. gas delivery and ignition apparatus; and L. designated distance.

### DESCRIPTION OF EMBODIMENTS

To make the objectives, technical solutions, and advantages of the embodiments of this application clearer, the technical solutions in the embodiments of this application are described clearly and completely below. Embodiments in which specific conditions are not specified are implemented in accordance with general conditions or conditions recommended by a manufacturer. Reagents or instruments used are conventional products commercially available if no manufacturer is indicated.

The embodiments of the technical solutions of this application are described in detail below with reference to the accompanying drawings. The following embodiments are only used to more clearly illustrate the technical solutions of this application and thus serve as examples, not to limit the protection scope of this application.

Unless otherwise defined, all technical and scientific terms used herein have the same meaning as commonly understood by persons skilled in the technical field of this application. The terms used herein are only for the purpose of describing specific embodiments and are not intended to limit this application. The terms "include" and "have" in the specification, claims, and descriptions of the drawings of this application, as well as any variations thereof, are intended to cover non-exclusive inclusion.

In the description of the embodiments of this application, technical terms such as "first" and "second" are used only to distinguish different objects and should not be understood as indicating or implying relative importance or implicitly indicating a quantity, specific order, or primary-secondary relationship of the indicated technical features.

In the description of the embodiments of this application, the technical term "and/or," such as "feature 1 and/or feature 2," refers to only "feature 1", or only "feature 2", or a combination of "feature 1" and "feature 2". In addition, the character "/" herein generally indicates an "or" relationship between associated objects.

In the description of the embodiments of this application, unless otherwise specified, the meaning of "more" in "one or more" refers to two or more.

Reference to "an embodiment" herein means that a particular feature, structure, or characteristic described with reference to the embodiment may be included in at least one embodiment of this application. The phrase appearing in various places in the specification does not necessarily refer to the same embodiment or an independent or alternative embodiment exclusive of other embodiments. Persons skilled in the art explicitly and implicitly understand that the embodiments described herein may be combined with other embodiments.

In the embodiments of this application, the same reference signs denote the same components, and for brevity, detailed descriptions of the same components are not repeated in different embodiments. It should be understood that, as shown in the accompanying drawings, dimensions such as height, length, and width of various components and dimensions such as height, length, and width of integrated apparatuses in the embodiments of this application are merely for illustrative purposes and should not constitute any limitation on this application.

From the perspective of market development, the application of traction batteries is becoming increasingly widespread. Traction batteries are not only used in energy storage power systems such as hydroelectric, thermal, wind, and solar power plants but are also widely applied in electric vehicles such as electric bicycles, electric motorcycles, and electric cars, as well as military equipment, aerospace, and other fields. With the continuous expansion of the application fields of traction batteries, market demands for traction batteries are also increasing.

With the continuous development of the new energy industry, the market has imposed more diverse requirements on battery electrode plates. Electrolyte infiltration of a positive electrode plate is a factor affecting battery performance. Improving the electrolyte infiltration of the positive electrode plate helps to improve rate performance, discharge capacity, and the like of the battery.

As a higher requirement for thicker coating of the positive electrode active material layer is imposed, a compacted density of the positive electrode plate becomes higher, and pores between active materials are compressed, making electrolyte infiltration difficult. In some current technical solutions, improvements to the positive electrode plate are typically made based on the above reasons to enhance infiltration.

However, research has found that clogging pores by a floating binder is a significant factor affecting the electrolyte infiltration of the positive electrode plate, and current technical solutions cannot effectively remove the floating binder in the positive electrode plate.

Based on this, the embodiments of this application provide a positive electrode plate and a treatment method thereof. Performing combustion treatment on a surface of the positive electrode plate enables flame to ablate and reduce the floating binder, helping to alleviate blockage of pores by the floating binder, thereby effectively improving the electrolyte infiltration of the positive electrode plate.

A battery cell, that is disclosed in the embodiments of this application and that applies the positive electrode plate, can be used, but is not limited to being used, in electric apparatuses such as vehicles, ships, or aircraft. The embodiments of this application provide an electric apparatus using a battery as a power source, and the electric apparatus may be, but is not limited to, mobile phones, tablets, laptops, electric toys, electric tools, electric bicycles, electric cars, ships, spacecraft, and the like. The electric toy may be a fixed or mobile electric toy, for example, a game console, an electric toy car, an electric toy ship, or an electric toy airplane. The spacecraft may include an airplane, a rocket, a space shuttle, a spaceship, and the like.

For ease of description, in the following embodiments, an example in which an electric device according to the embodiments of this application is a vehicle is used for description.

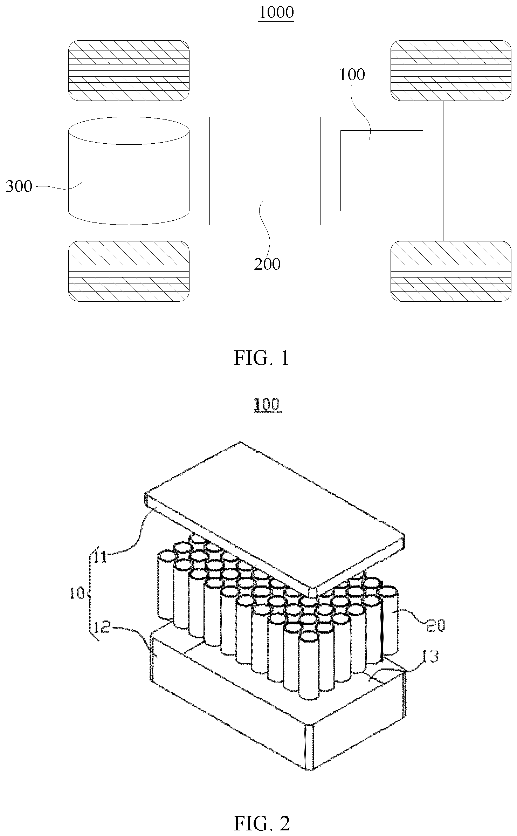

Refer to FIG. 1. FIG. 1 is a schematic structural diagram of a vehicle 1000 according to some embodiments of this application. The vehicle 1000 may be a fuel vehicle, a gas vehicle, or a new energy vehicle, where the new energy vehicle may be a pure electric vehicle, a hybrid vehicle, or an extended-range vehicle. The vehicle 1000 is provided with a battery 100 inside, and the battery 100 may be disposed at a bottom, front, or rear of the vehicle 1000. The battery 100 may be configured to supply power to the vehicle 1000, for example, the battery 100 may serve as an operating power source for the vehicle 1000. The vehicle 1000 may further include a controller 200 and a motor 300, where the controller 200 is configured to control the battery 100 to supply power to the motor 300, for example, for working power demands during starting, navigation, and driving of the vehicle 1000.

In some embodiments of this application, the battery 100 may not only serve as an operating power source for the vehicle 1000 but also as a driving power source for the vehicle 1000, completely or partially replacing fuel or natural gas to provide driving power for the vehicle 1000.

In this application, the battery 100 refers to a single physical module including one or more battery cells 20 to provide a certain voltage and capacity, and may be in a form of a battery pack, a battery module, or the like. The battery 100 may include a box 10 configured to encapsulate one or more battery cells 20, where the box 10 can prevent liquids or other foreign objects from affecting charge or discharge of the battery cells 20.

Refer to FIG. 2. FIG. 2 is an exploded view of a battery 100 according to some embodiments of this application. The battery 100 includes a box 10 and a plurality of battery cells 20, where the plurality of battery cells 20 are accommodated in the box 10. The box 10 is configured to accommodate the battery cells 20, and the box 10 may have various structures. In some embodiments, the box 10 may include a first portion 11 and a second portion 12. The first portion 11 and the second portion 12 fit together so that the first portion 11 and the second portion 12 jointly define an accommodating space 13 for accommodating the battery cells 20. The second portion 12 may be a hollow structure with an opening at one side, the first portion 11 may be a plate-shaped structure, and the first portion 11 covers the opening side of the second portion 12 to form the box 10 having the accommodating space 13. Alternatively, the first portion 11 and the second portion 12 may each be a hollow structure with an opening at one side, and the opening side of the first portion 11 fits with the opening side of the second portion 12 to form the box 10 having the accommodating space 13. Certainly, the first portion 11 and the second portion 12 may be in various shapes, such as a cylinder or a cuboid.

In the battery 100, the plurality of battery cells 20 may be connected in series, parallel, or series-parallel, where series-parallel connection means that the plurality of battery cells 20 are in series and parallel connections. The plurality of battery cells 20 may be directly connected in series, parallel, or series-parallel, and then an entirety of the plurality of battery cells 20 is accommodated in the box 10. Alternatively, the plurality of battery cells 20 may first be connected in series, parallel, or series-parallel to form modules, and then a plurality of modules are connected in series, parallel, or series-parallel to form an entirety accommodated in the box 10. The battery 100 may further include other structures. For example, the plurality of battery cells 20 may be electrically connected via a busbar component, such that the plurality of battery cells 20 are connected in series, parallel, or series-parallel.

The battery cell 20 refers to a smallest unit constituting a battery pack. The battery cell 20 may be a lithium-sulfur battery, a sodium-ion battery, or a magnesium-ion battery, but is not limited thereto.

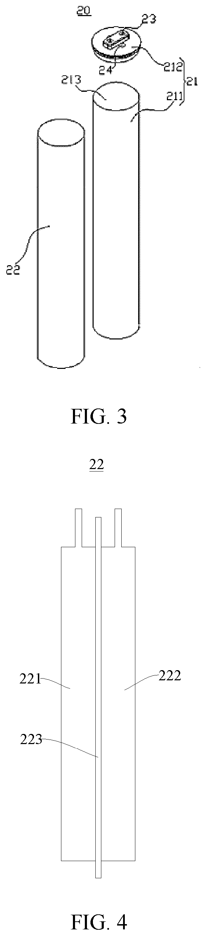

Refer to FIG. 3. The battery cell 20 may include a housing 21, an electrode assembly 22, and an electrolyte, where the electrode assembly 22 and the electrolyte are both accommodated in the housing 21.

The housing 21 may include a housing body 211 and a cover 212. The housing body 211 is a component configured to fit with the cover 212 to create an internal sealed space 213 of the battery cell 20, where the internal sealed space 213 created can be used to accommodate the electrode assembly 22, the electrolyte, and other components. The cover 212 is a component that covers an opening of the housing body 211 to isolating the internal environment of the battery cell 20 from the external environment. The cover 212 may have a shape adapted to a shape of the housing body 211 to fit with the housing body 211. The cover 212 may further be provided with functional components such as an electrode terminal 23 and a pressure relief structure 24. A sealing ring may be provided between the opening of the housing body 211 and the cover 212 for sealing between the housing body 211 and the cover 212.

The housing body 211 and the cover 212 may be of various shapes and sizes, for example, a rectangular shape, a cylindrical shape, or a hexagonal prism shape. Specifically, the shapes of the housing body 211 and the cover 212 may be determined based on a specific shape and size of the electrode assembly 22. The housing body 211 and the cover 212 may be made of various materials, including but not limited to, metals such as copper, iron, aluminum, steel, and aluminum alloy. The sealing ring may be made of various materials, including but not limited to electrolyte corrosion-resistant materials with high-toughness and anti-fatigue properties such as PP (polypropylene), PC (polycarbonate), and PET (polyethylene terephthalate). A plating layer may be formed on an outer surface of the housing body 211. The plating layer may be made of various materials, for example, corrosion-resistant materials such as Ni and Cr, but is not limited thereto.

The battery cell 20 may alternatively be in a form of soft pack, such as a soft pouch. A material of the soft pack may be plastic. Examples of plastic materials include polypropylene, polybutylene terephthalate, and polybutylene succinate.

Refer to FIG. 4. The electrode assembly 22 includes a negative electrode plate 222, a separator 223, and a positive electrode plate 221. The battery cell 20 operates mainly based on migration of metal ions between the positive electrode plate 221 and the negative electrode plate 222. During charge/discharge, active ions intercalate and deintercalate back and forth between the positive electrode plate 221 and the negative electrode plate 222. The separator 223 is disposed between the positive electrode plate 221 and the negative electrode plate 222, primarily to prevent short-circuit between the positive electrode and negative electrode while allowing ions to pass through. The electrode assembly 22 may be a wound structure or a laminated structure. The embodiments of this application are not limited thereto.

The positive electrode plate 221 includes a positive electrode current collector and a positive electrode active material layer, where the positive electrode active material layer is disposed on at least one side of the positive electrode current collector. A primer layer or the like may also be disposed between the positive electrode active material layer and the positive electrode current collector.

The positive electrode current collector may be a metal foil or a composite current collector, for example, a material of the positive electrode current collector may be aluminum. The composite current collector may include a polymer material substrate and a metal layer formed on at least one side of the polymer material substrate. The composite current collector may be formed by forming a metal material (such as aluminum, aluminum alloy, nickel, nickel alloy, titanium, titanium alloy, silver, or silver alloy) on a polymer material substrate (such as a substrate of polypropylene (PP), polyethylene terephthalate (PET), polybutylene terephthalate (PBT), polystyrene (PS), or polyethylene (PE)).

The positive electrode active material in the positive electrode active material layer may include at least one of the following materials: a lithium-containing phosphate with an olivine structure, a lithium transition metal oxide, and their respective modified compounds. However, this application is not limited to these materials, and other conventional materials that can be used as positive electrode active materials may alternatively be used. These positive electrode active materials may be used alone or in combination of two or more. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), lithium nickel cobalt aluminum oxide (such as LiNi_{0.85}Co_{0.15}Al_{0.05}O₂), and their modified compounds. Examples of the lithium-containing phosphate with an olivine structure may include, but are not limited to, at least one of lithium iron phosphate (such as LiFePO₄), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the positive electrode active material layer may optionally further include a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode active material layer may optionally further include a conductive agent. For example, the conductive agent may include at least one of superconducting carbon, acetylene black, carbon black, Ketjen black, carbon dots, carbon nanotubes, graphene, and carbon nanofibers.

The negative electrode plate 222 includes a negative electrode current collector and a negative electrode active material layer, where the negative electrode active material layer is disposed on at least one side of the negative electrode current collector. A primer layer or the like may also be disposed between the negative electrode current collector and the negative electrode active material layer.

The negative electrode current collector may be a metal foil or a composite current collector, for example, a material of the negative electrode current collector may be copper. The composite current collector may include a polymer material substrate and a metal layer formed on at least one side of the polymer material substrate. The composite current collector may be formed by forming a metal material (such as copper, copper alloy, nickel, nickel alloy, titanium, titanium alloy, silver, or silver alloy) on a polymer material substrate (such as a substrate of polypropylene (PP), polyethylene terephthalate (PET), polybutylene terephthalate (PBT), polystyrene (PS), or polyethylene (PE)).

The negative electrode active material in the negative electrode active material layer may be a negative electrode active material such as carbon or silicon. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tinoxygen compound, and tin alloy. However, this application is not limited to these materials, and other conventional materials that can be used as negative electrode active materials may alternatively be used.

In some embodiments, the negative electrode active material layer may optionally further include a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer may optionally further include a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode active material layer may optionally further include other additives, such as a thickener (for example, sodium carboxymethyl cellulose (CMC-Na)).

The separator 223 is disposed between the positive electrode plate 221 and the negative electrode plate 222 for isolation. A type of the separator 223 is not particularly limited in these embodiments of this application, and any well-known porous-structure separator 223 with good chemical stability and mechanical stability may be used.

In some embodiments, a material of the separator 223 may be selected from at least one of glass fiber, non-woven fabric, polyethylene, polypropylene, and polyvinylidene fluoride. The separator 223 may be a single-layer film or a multilayer composite film. This is not particularly limited. When the separator 223 is a multilayer composite film, materials of the multiple layers may be the same or different. This is not particularly limited.

The positive electrode plate 221 and the treatment method thereof provided by the embodiments of this application are described in detail below.

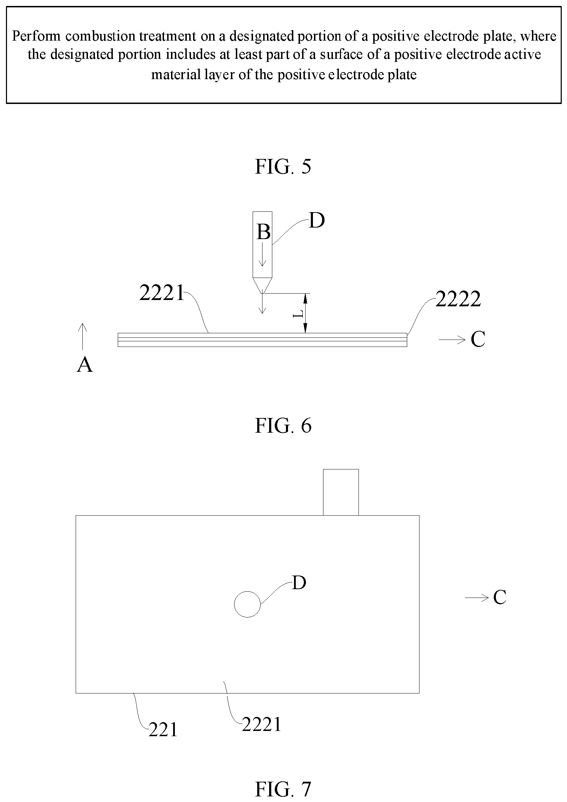

Refer to FIG. 5. According to a first aspect, an embodiment of this application provides a treatment method of a positive electrode plate, including: performing combustion treatment on a designated portion of the positive electrode plate 221, where the designated portion includes at least part of a surface of the positive electrode active material layer of the positive electrode plate 221.

Refer to FIG. 6. The surface of the positive electrode active material layer includes a first surface 2221 of the positive electrode active material layer and a second surface 2222 of the positive electrode active material layer. The first surface 2221 of the positive electrode active material layer refers to a surface of the positive electrode active material layer distributed along a thickness direction A of the positive electrode plate, in other words, the first surface of the positive electrode active material layer is substantially perpendicular to the thickness direction A of the positive electrode plate. The second surface 2222 of the positive electrode active material layer refers to a surface of the positive electrode active material layer that is substantially parallel to the thickness direction A of the positive electrode plate.

For example, the designated portion includes at least the first surface 2221 of the positive electrode active material layer.

The treatment method of the positive electrode plate provided by these embodiments of this application includes performing combustion treatment on the surface of the positive electrode plate 221. Flame can ablate and reduce a floating binder (binder), helping to alleviate blockage of pores by the floating binder, thereby increasing a porosity of the positive electrode active material layer and effectively improving electrolyte infiltration of the positive electrode plate 221.

In addition, research has found that although the combustion treatment consumes the binder in the positive electrode active material layer, since the consumed binder is the floating binder, good adhesion between the positive electrode active material layer and the positive electrode current collector can be maintained. Further, research has found that the combustion treatment reduces a resistance of the positive electrode plate 221, helping to improve electrical performance of the positive electrode plate 221.

In some embodiments, upon completion of the combustion treatment, a combustion region on the surface of the positive electrode active material layer reaches a designated temperature, where the designated temperature is 200°C to 500°C.

For example, the designated temperature may be, but is not limited to, any one of 200°C, 250°C, 300°C, 350°C, 400°C, 450°C, or 500°C, or may be in a range between any two of these values.

Completion of the combustion treatment refers to a state after the combustion treatment and before cooling treatment, for example, refers to detection of the combustion region at a certain distance downstream from a flame region in a case that the combustion region passes through the flame region, where the certain distance is, for example, 5 cm to 20 cm.

The designated temperature can be measured upon completion of the combustion treatment using a temperature measuring apparatus such as an infrared thermometer.

In these embodiments, the combustion region on the surface of the positive electrode active material layer is controlled to reach the designated temperature upon completion of the combustion treatment, so that the surface of the positive electrode active material layer can be treated at an appropriate temperature. This helps to effectively ablate and reduce the floating binder, thereby significantly improving the electrolyte infiltration of the positive electrode plate 221.

In some embodiments, the designated temperature is 300°C to 500°C. Optionally, the designated temperature is 350°C to 470°C.

In these embodiments, the combustion region is further controlled to reach the designated temperature, so that the surface of the positive electrode active material layer can be treated at a more appropriate temperature. This helps better ablate and reduce the floating binder, thereby further improving the electrolyte infiltration of the positive electrode plate 221.

In some embodiments, the binder in the positive electrode active material layer includes polyvinylidene fluoride.

For example, the binder in the positive electrode active material layer is primarily polyvinylidene fluoride, for example, the binder is polyvinylidene fluoride.

Polyvinylidene fluoride, abbreviated as PVDF, has a relatively low decomposition temperature of approximately 280°C to 350°C.

In these embodiments, the combustion treatment can effectively remove the floating binder formed by polyvinylidene fluoride, thereby significantly improving the electrolyte infiltration of the positive electrode plate 221.

In some embodiments, a positive electrode active material in the positive electrode active material layer includes a lithium-containing phosphate.

For example, the positive electrode active material in the positive electrode active material layer is primarily a lithium-containing phosphate, for example, the positive electrode active material is a lithium-containing phosphate.

The lithium-containing phosphate includes Li_{1+y1}Fe_{y2}Mn_{y3}M_{y4}P_{1-y5}O_{4-y6}, where - 0.8≤y1≤0.2, 0≤y2≤1, 0≤y3≤1, 0≤y4≤0.1, 0≤y5≤0.1, 0≤y6≤0.4, and M includes one or more of Al, Cu, Mg, Zn, Ni, Ti, V, Zr, Co, Ga, Sn, Sb, Nb, or Ge.

In these embodiments, a decomposition temperature difference between the lithium-containing phosphate and the binder is significant, facilitating control of the designated temperature to be above a decomposition temperature of the binder but below a decomposition temperature of the lithium-containing phosphate. This enables effective removal of the floating binder to improve infiltration while good electrochemical performance of the positive electrode active material layer is maintained.

In some embodiments, the lithium-containing phosphate includes lithium iron phosphate.

For example, the lithium-containing phosphate is primarily lithium iron phosphate, for example, the lithium-containing phosphate is lithium iron phosphate.

The lithium iron phosphate includes Li_{1+y1}Fe_{y2}P_{1-y5}O_{4-y6}, where values of y1, y5, and y6 are as described above, and 0<y2≤1. The lithium iron phosphate is, for example, LiFePO₄, abbreviated as LFP, with a decomposition temperature of approximately 550°C to 750°C.

In these embodiments, a decomposition temperature difference between lithium iron phosphate and the binder is significant, enabling effective removal of the floating binder to improve infiltration while good electrochemical performance of the positive electrode active material layer is maintained. In addition, lithium iron phosphate is a commonly used positive electrode active material, but a positive electrode plate using lithium iron phosphate often faces poor infiltration issues due to an increasing compacted density that causes narrowing of the gap within the positive electrode active material.

In some embodiments, the combustion treatment includes combusting a fuel gas and treating the designated portion with flame.

The fuel gas includes a combustible gas. For example, the gas is delivered to a designated position for combustion treatment through a gas delivery and ignition apparatus D such as an airbrush or burner. During the delivery of the fuel gas, optionally, an auxiliary gas may be delivered together with the fuel gas or separately from the fuel gas.

In the process of treating the designated portion with the generated flame, the flame heats the designated portion, causing the designated portion to be scorched by the flame.

Optionally, the fuel gas includes one or more of methane, propane, or acetylene.

For example, the fuel gas may be one of methane, propane, or acetylene.

For another example, the fuel gas includes multiple combustible gases, where one or more of the gases are selected from methane, propane, or acetylene, and the gases may further include other types of combustible gases, for example, the fuel gas is liquefied gas, coal gas, or natural gas.

In these embodiments, performing the combustion treatment by combusting a fuel gas allows airflow generated by the fuel gas to blow away an ablation product of the floating binder. This facilitates more thorough ablation of the floating binder by the flame and helps maintain high cleanliness on the surface of the positive electrode plate 221.

In some embodiments, during the combustion treatment, a flow rate of the fuel gas is 3 L/min to 12 L/min; and optionally, the flow rate of the fuel gas is 5 L/min to 8 L/min.

The flow rate of a specified gas refers to a volume of the specified gas supplied per unit time.

For example, the flow rate of the fuel gas may be, but is not limited to, any one of 3 L/min, 4 L/min, 5 L/min, 6 L/min, 7 L/min, 8 L/min, 9 L/min, 10 L/min, 11 L/min, or 12 L/min, or may be in a range between any two of these values.

In these embodiments, maintaining an appropriate fuel gas flow rate during the combustion treatment enables flame to provide appropriate heat to the designated portion, effectively removing the floating binder at an appropriate temperature to improve infiltration.

In some embodiments, during the combustion treatment, a flow rate of air is 70 L/min to 260 L/min. Optionally, the flow rate of air is 120 L/min to 180 L/min.

For example, the flow rate of air may be, but is not limited to, any value of 70 L/min, 80 L/min, 90 L/min, 100 L/min, 110 L/min, 120 L/min, 130 L/min, 140 L/min, 150 L/min, 160 L/min, 170 L/min, 180 L/min, 190 L/min, 200 L/min, 210 L/min, 220 L/min, 230 L/min, 240 L/min, 250 L/min, or 260 L/min, or may be in a range between any two of these values.

In these embodiments, maintaining an appropriate air flow rate during the combustion treatment facilitates achieving an appropriate air-fuel ratio, enabling flame to provide appropriate heat to the designated portion, effectively removing the floating binder at an appropriate temperature to improve infiltration.

In some embodiments, during the combustion treatment, an air-fuel ratio is (2-5):1. Optionally, the air-fuel ratio is (3-4):1.

For example, the air-fuel ratio may be, but is not limited to, any value of 2:1, 2.5:1, 3:1, 3.5:1, 4: 1, 4.5: 1, or 5:1, or may be in a range between any two of these values.

The air-fuel ratio is well-known in the art, with a commonly understood meaning, and can be measured using well-known instruments and testing methods in the art. For example, the air-fuel ratio refers to a mass ratio between air and a fuel gas, which can be controlled by using a method of matching flow rates of fuel gas and air. For example, according to an air-fuel ratio, the fuel gas and air are mixed at specific flow rates, and then a mixed gas is introduced for combustion.

In these embodiments, maintaining an appropriate air-fuel ratio during the combustion treatment enables flame to provide appropriate heat to the designated portion, effectively removing the floating binder at an appropriate temperature to improve infiltration.

Refer to FIG. 6. In some embodiments, during the combustion treatment, the fuel gas is sprayed toward the positive electrode plate 221 for combustion at a designated distance L from the positive electrode plate 221, where the designated distance L is 5 cm to 10 cm. Optionally, the designated distance L is 5 cm to 7.5 cm.

For example, the designated distance L is, but is not limited to, any value of 5 cm, 6 cm, 7 cm, 8 cm, 9 cm, or 10 cm, or may be in a range between any two of these values.

Refer to FIG. 6. The designated distance L refers to a vertical distance from a combustion port of the fuel gas to the first surface 2221 of the positive electrode plate, that is, a distance from the combustion port of the fuel gas to the first surface 2221 of the positive electrode plate along a thickness direction A of the positive electrode plate.

In these embodiments, spraying the fuel gas toward the positive electrode plate 221 at an appropriate designated distance for combustion facilitates controlling the temperature at which flame acts on the positive electrode plate 221, effectively removing the floating binder to improve infiltration.

Refer to FIG. 6. In some embodiments, during the combustion treatment, the fuel gas is sprayed toward the positive electrode plate 221 in a designated direction B for combustion, and an angle between the designated direction B and the thickness direction A of the positive electrode plate is 0° to 30°. Optionally, the angle between the designated direction B and the thickness direction A of the positive electrode plate is 0° to 10°.

For example, for example, the angle between the designated direction B and the thickness direction A of the positive electrode plate is, but is not limited to, any value of 0°, 5°, 10°, 15°, 20°, 25°, or 30°, or may be in a range between any two of these values.

In a case that the angle between the designated direction B and the thickness direction A of the positive electrode plate is 0°, the designated direction B is substantially perpendicular to the first surface 2221 of the positive electrode active material layer. In a case that the angle between the designated direction B and the thickness direction A of the positive electrode plate is 90°, the designated direction B is substantially parallel to the first surface 2221 of the positive electrode active material layer.

Refer to FIG. 6. The designated direction B refers to a direction in which the fuel gas is sprayed from the combustion port, where the designated direction B is substantially aligned with an axial direction of the combustion port.

In these embodiments, spraying the fuel gas toward the positive electrode plate 221 at an appropriate designated angle for combustion enables flame to effectively burn the positive electrode plate 221, more effectively removing the floating binder to improve infiltration.

In some embodiments, during the combustion treatment, the positive electrode plate 221 passes through flame at a designated speed, where the designated speed is 40 m/min to 100 m/min. Optionally, the designated speed is 50 m/min to 80 m/min.

For example, the designated speed is, but is not limited to, any single value of 40 m/min, 50 m/min, 60 m/min, 70 m/min, 80 m/min, 90 m/min, or 100 m/min, or may be in a range between any two of these values.

Refer to FIG. 6 and FIG. 7. In these embodiments of this application, optionally, a position at which the gas delivery and ignition apparatus D sprays and ignites the fuel gas is fixed, and the positive electrode plate 221 is conveyed at a designated speed relative to the gas delivery and ignition apparatus D through a belt, roller, or the like, so that the positive electrode plate 221 passes through flame at the designated speed.

For example, the first surface 2221 of the positive electrode active material layer is placed flat on a conveying surface for conveyance, that is, a passing direction C of the positive electrode plate is substantially perpendicular to the thickness direction A of the positive electrode plate.

In these embodiments, the positive electrode plate 221 passes through flame at an appropriate designated speed. This facilitates controlling the surface of the positive electrode plate 221 to reach an appropriate temperature, effectively removing the floating binder to improve infiltration.

In some example embodiments, the positive electrode plate 221 includes first edges distributed oppositely along a first direction and second edges distributed oppositely along a second direction. For example, the first direction and the second direction are two mutually perpendicular directions. During the combustion treatment, the positive electrode plate 221 passes through flame along the second direction, and flame can at least cover the entire first surface 2221 of the positive electrode active material layer in the first direction (that is, from one edge to the opposite edge in the first direction), so that after the entire positive electrode plate 221 passes through flame along the second direction, the entire first surface 2221 of the positive electrode active material layer facing flame undergoes combustion treatment.

According to a second aspect, an embodiment of this application provides a positive electrode plate 221 obtained through treatment according to the treatment method of the positive electrode plate as described in the above embodiments.

In some embodiments, a rate of electrolyte infiltration into the positive electrode plate 221 is greater than 0.27 µg/s. Optionally, a rate of electrolyte infiltration into the positive electrode plate 221 is greater than or equal to 0.33 µg/s.

In these embodiments, the positive electrode plate 221 exhibits a high electrolyte infiltration rate, indicating good electrolyte infiltration of the positive electrode plate 221.

In some embodiments, a porosity of the positive electrode plate 221 is greater than 29.2%. Optionally, the porosity of the positive electrode plate 221 is greater than or equal to 32.6%.

In these embodiments, the positive electrode plate 221 has a high porosity, helping to improve the electrolyte infiltration of the positive electrode plate 221.

According to a third aspect, an embodiment of this application provides a battery 100, including the positive electrode plate 221 as described in the above embodiments.

According to a fourth aspect, an embodiment of this application provides an electric device, including the battery 100 as described in the above embodiments.

Some specific examples are provided below to better illustrate this application.

### I. Processing of positive electrode plate

### (1) Preparation of positive electrode plate

Lithium iron phosphate (LFP), conductive agent carbon black, polyvinylidene fluoride (PVDF), and N-methylpyrrolidone (NMP) were mixed at a weight ratio of 97:2:1:21 and stirred uniformly to obtain a positive electrode slurry. The positive electrode slurry was then uniformly applied to a positive electrode current collector, followed by drying, cold pressing, and slitting, to obtain a positive electrode plate.

### (2) Surface treatment of positive electrode plate

The positive electrode plate was placed in a conveying apparatus, and a fuel gas was ignited. The positive electrode plate was passed through flame by the conveying apparatus, so that the entire first surface of an active material layer facing flame was treated with flame.

A placement direction of the positive electrode plate, a passing direction of the positive electrode plate, and a configuration position of a gas delivery and ignition apparatus are shown in FIG. 6 and FIG. 7. Process parameter conditions such as a flow rate of the fuel gas, a flow rate of air, an air-fuel ratio, an angle between a designated direction and a thickness direction of the positive electrode plate, a designated distance, and a designated speed are shown in Table 1.

**Table 1 Process parameter conditions**

| Item | Flow rate of fuel gas (L/min) | Flow rate of air (L/min) | Air-fuel ratio | Angle between designated direction and thickness direction of positive electrode plate (°) | Designated distance (cm) | Designated speed (m/min) |
|---|---|---|---|---|---|---|
| Example 1 | 6 | 160 | 3.9 | 0 | 7.5 | 80 |
| Example 2 | 7 | 180 | 3.9 | 0 | 7.5 | 80 |
| Example 3 | 5 | 130 | 3.9 | 0 | 7.5 | 80 |
| Example 4 | 5 | 120 | 3.65 | 0 | 7.5 | 80 |
| Example 5 | 3 | 70 | 3.25 | 0 | 7.5 | 80 |
| Example 6 | 12 | 260 | 3.25 | 0 | 7.5 | 80 |
| Example 7 | 6 | 120 | 3 | 0 | 7.5 | 80 |
| Example 8 | 6 | 100 | 2 | 0 | 7.5 | 80 |
| Example 9 | 6 | 200 | 5 | 0 | 7.5 | 80 |
| Example 10 | 6 | 130 | 3.25 | 0 | 7.5 | 50 |
| Example 11 | 6 | 130 | 3.25 | 0 | 7.5 | 80 |
| Example 12 | 6 | 130 | 3.25 | 0 | 7.5 | 100 |
| Example 13 | 6 | 130 | 3.25 | 0 | 5 | 80 |
| Example 14 | 6 | 130 | 3.25 | 0 | 10 | 80 |
| Example 15 | 6 | 130 | 3.25 | 30 | 7.5 | 80 |
| Example 16 | 8 | 170 | 3.25 | 0 | 7.5 | 50 |
| Example 17 | 8 | 170 | 3.25 | 0 | 7.5 | 80 |
| Example 18 | 8 | 170 | 3.25 | 0 | 7.5 | 100 |
| Example 19 | 8 | 170 | 3.25 | 0 | 5 | 80 |
| Example 20 | 8 | 170 | 3.25 | 0 | 10 | 80 |
| Example 21 | 8 | 170 | 3.25 | 30 | 7.5 | 80 |
| Comparative example 1 | / | / | / | / | / | / |

In Table 1, Comparative example 1 indicates that no combustion treatment is performed on the positive electrode plate.

Further, it should be noted that due to possible slight differences in the compositions of the fuel gas and air used in different examples, a difference between ratios of the flow rates of fuel gas to air is not necessarily in a 1:1 relationship with a difference in the air-fuel ratios in different examples. For example, in Example 1 and Example 2, the ratios of flow rates of fuel gas to air are different, but the air-fuel ratios are the same.

### II. Test methods

### (1) Designated temperature detection

When the positive electrode plate passed through a flame region, a surface temperature of the positive electrode plate was detected using an infrared thermometer at a distance of 8 cm downstream from the flame region, to obtain a designated temperature.

### (2) Electrolyte infiltration detection

The positive electrode plate was fixed on a clean glass plate. A 0.2 mm capillary tube was used to draw an electrolyte to a height of 3 mm, and the electrolyte was then brought into vertical contact with the positive electrode plate. The positive electrode plate absorbed the electrolyte. A time taken to completely absorb the electrolyte was measured, and an electrolyte absorption rate, that is, an infiltration rate, was calculated.

### (3) Porosity detection

In a dry room, more than 20 circular pieces with good appearance and no powder detachment at the edges were selected using a tweezer and placed into a sample cup. A quantity of pieces was recorded, and an apparent volume was calculated. The sample cup containing the samples was placed in a true density tester, and the test system was sealed. Helium gas was introduced according to the procedure, and pressures of the gas in a sample chamber and an expansion chamber were detected. A true volume was calculated based on Boyle's law (PV=nRT), thereby obtaining a porosity of the test sample.

### (4) Resistance detection

Small circular pieces with a diameter of 10 mm were cut from left, middle, and right parts of the positive electrode plate. An indicator light of a resistance tester from Initial Energy Science&Technology Co., Ltd was turned on, and the small circular piece was placed at an appropriate position on a "probe" of the film resistance tester. After pressing the "Start" button, a stable reading was recorded. Each small circular piece was tested at two positions, and an average of six measurements was calculated as a film resistance of the positive electrode plate.

### (5) Adhesion detection

The positive electrode plate was cut into a standby test sample with a dimension of 20*100 mm². A double-sided tape was applied to a test side of the sample and pressed with a roller to ensure complete adhesion between the double-sided tape and the test sample. Another side of the double-sided tape of the test sample was applied to a stainless steel surface. One end of the test sample was bent backward at a bending angle of 180°. A Gotech tensile testing machine was used for testing. The stainless steel end was fixed to a lower clamp of the tensile testing machine, and the bent end of the test sample was fixed to an upper clamp. The angle of the test sample was adjusted to ensure that an upper end and a lower end were vertically aligned. The test sample was then stretched at a speed of 50 mm/min until the test sample was completely peeled off from a substrate. Displacements and forces during the process were recorded, and a force at force equilibrium was generally considered the adhesion of the positive electrode plate.

### III. Test results and result analysis

The test results of the positive electrode plate are shown in Table 2.

**Table 2**

| Item | Surface temperature of electrode plate (°C) | Infiltration rate (µg/s) | Porosity (%) | Film resistance (Q) | Adhesion (N/m) |
|---|---|---|---|---|---|
| Example 1 | 430 | 0.46 | 45.8 | 0.001722 | 18.0 |
| Example 2 | 470 | 0.48 | 45.8 | 0.001701 | 17.6 |
| Example 3 | 410 | 0.48 | 46.0 | 0.001687 | 18.8 |
| Example 4 | 320 | 0.44 | 44.8 | 0.001633 | 19.0 |
| Example 5 | 130 | 0.29 | 31.1 | 0.002210 | 18.4 |
| Example 6 | 150 | 0.3 | 33.3 | 0.002110 | 18.5 |
| Example 7 | 240 | 0.32 | 32.6 | 0.001947 | 18.5 |
| Example 8 | 140 | 0.29 | 31.0 | 0.002230 | 18.3 |
| Example 9 | 160 | 0.31 | 31.6 | 0.002030 | 18.4 |
| Example 10 | 440 | 0.46 | 45.8 | 0.001693 | 18.4 |
| Example 11 | 350 | 0.47 | 45.6 | 0.001648 | 18.8 |
| Example 12 | 260 | 0.37 | 34.5 | 0.001966 | 19.2 |
| Example 13 | 420 | 0.46 | 45.3 | 0.001713 | 18.2 |
| Example 14 | 250 | 0.33 | 33.6 | 0.001987 | 18.9 |
| Example 15 | 300 | 0.38 | 42.5 | 0.001633 | 18.5 |
| Example 16 | 450 | 0.48 | 45.5 | 0.001740 | 17.9 |
| Example 17 | 350 | 0.48 | 45.9 | 0.001622 | 18.8 |
| Example 18 | 270 | 0.36 | 34.5 | 0.001959 | 18.6 |
| Example 19 | 440 | 0.47 | 48.1 | 0.001773 | 18.3 |
| Example 20 | 270 | 0.35 | 35.1 | 0.001983 | 19.0 |
| Example 21 | 320 | 0.40 | 40.2 | 0.001768 | 19.1 |
| Comparative example 1 | / | 0.27 | 29.2 | 0.002343 | 18.6 |

Based on Table 1 and Table 2, a brief analysis is as follows.

In Examples 1 to 21, the positive electrode plate is subjected to combustion treatment. In Comparative example 1, no combustion treatment is performed on the positive electrode plate. Compared with Comparative example 1, in Examples 1 to 21, the infiltration rate and porosity of the positive electrode plate are improved to different degrees. Moreover, compared with Comparative example 1, in Examples 1 to 21, good adhesion is maintained, and the film resistance does not deteriorate but is lowered to different degrees.

In Examples 1 to 21, when the surface temperature of the electrode plate reached above 300°C, and further above 350°C, both the infiltration rate and porosity of the positive electrode plate reach high levels.

Finally, it should be noted that the above embodiments are only used to illustrate the technical solutions of this application and not to limit the technical solutions. Although this application is described in detail with reference to the above embodiments, persons of ordinary skill in the art should understand that modifications can still be made to the technical solutions described in the foregoing embodiments, or equivalent substitutions can be made to some or all of the technical features. Such modifications or substitutions do not cause the essence of the corresponding technical solutions to depart from the scope of the technical solutions of the embodiments of this application, and they should fall within the scope of the claims and specification of this application. In particular, as long as there is no structural conflict, the technical features mentioned in the various embodiments can be combined in any manner. This application is not limited to the specific embodiments disclosed in this specification but includes all technical solutions falling within the scope of the claims.

## Claims

1. A treatment method of a positive electrode plate, comprising: performing combustion treatment on a designated portion of the positive electrode plate, wherein the designated portion comprises at least part of a surface of a positive electrode active material layer of the positive electrode plate.

2. The treatment method of the positive electrode plate according to claim 1, wherein upon completion of the combustion treatment, a combustion region on the surface of the positive electrode active material layer reaches a designated temperature, wherein the designated temperature is 200°C to 500°C.

3. The treatment method of the positive electrode plate according to claim 2, wherein the designated temperature is 300°C to 500°C, and optionally, the designated temperature is 350°C to 470°C.

4. The treatment method of the positive electrode plate according to any one of claims 1 to 3, wherein a binder in the positive electrode active material layer comprises polyvinylidene fluoride.

5. The treatment method of the positive electrode plate according to any one of claims 1 to 4, wherein a positive electrode active material in the positive electrode active material layer comprises a lithium-containing phosphate.

6. The treatment method of the positive electrode plate according to claim 5, wherein the lithium-containing phosphate comprises lithium iron phosphate.

7. The treatment method of the positive electrode plate according to any one of claims 1 to 6, wherein the combustion treatment comprises combusting a fuel gas and treating the designated portion with flame.

8. The treatment method of the positive electrode plate according to claim 7, wherein during the combustion treatment, a flow rate of the fuel gas is 3 L/min to 12 L/min, and optionally, the flow rate of the fuel gas is 5 L/min to 8 L/min.

9. The treatment method of the positive electrode plate according to claim 7 or 8, wherein during the combustion treatment, a flow rate of air is 70 L/min to 260 L/min, and optionally, the flow rate of air is 120 L/min to 180 L/min.

10. The treatment method of the positive electrode plate according to any one of claims 7 to 9, wherein during the combustion treatment, an air-fuel ratio is (2-5):1, and optionally, the air-fuel ratio is (3-4):1.

11. The treatment method of the positive electrode plate according to any one of claims 7 to 10, wherein during the combustion treatment, the fuel gas is sprayed toward the positive electrode plate for combustion at a designated distance from the positive electrode plate, the designated distance is 5 cm to 10 cm, and optionally, the designated distance is 5 cm to 7.5 cm.

12. The treatment method of the positive electrode plate according to any one of claims 7 to 11, wherein during the combustion treatment, the fuel gas is sprayed toward the positive electrode plate in a designated direction for combustion, an angle between the designated direction and a thickness direction of the positive electrode plate is 0° to 30°, and optionally, the angle between the designated direction and the thickness direction of the positive electrode plate is 0° to 10°.

13. The treatment method of the positive electrode plate according to any one of claims 7 to 12, wherein during the combustion treatment, the positive electrode plate passes through the flame at a designated speed, the designated speed is 40 m/min to 100 m/min, and optionally, the designated speed is 50 m/min to 80 m/min.

14. A positive electrode plate, obtained through treatment by using the treatment method of the positive electrode plate according to any one of claims 1 to 13.

15. The positive electrode plate according to claim 14, wherein a rate of electrolyte infiltration into the positive electrode plate is greater than 0.27 µg/s, and optionally, the rate of electrolyte infiltration into the positive electrode plate is greater than or equal to 0.33 µg/s.

16. The positive electrode plate according to claim 14 or 15, wherein a porosity of the positive electrode plate is greater than 29.2%, and optionally, the porosity of the positive electrode plate is greater than or equal to 32.6%.

17. A battery, comprising the positive electrode plate according to any one of claims 14 to 16.

18. An electric device, comprising the battery according to claim 17.
